# EUROPEAN PATENT SPECIFICATION

(11) **EP 2 159 108 B1**
(45) Date of publication and mention of the grant of the patent: **22.06.2011**
(21) Application number: 08075739.6
(22) Date of filing: 29.08.2008
(51) Int. Cl.: B60R 13/06, B60J 10/00

(54) **Sealing Assembly and Method for Producing that Sealing Assembly**
Dichtungsanordnung und Verfahren zur Herstellung dieser Dichtungsanordnung
Ensemble d'étanchéité et procédé de production de cette ensemble d'étanchéité

(43) Date of publication of application: 03.03.2010
(73) Proprietor: Faurecia Innenraum Systeme GmbH, 76767 Hagenbach (DE)
(72) Inventor: Vilarasau-Durany, Marta, 25600 Balaguer (ES); Sanz Miralles, Daniel, 08640 Olesa De Montserrat (ES); Diestre Estebe, Angel, 08022 Barcelona (ES)
(74) Representative: Pfenning, Meinig & Partner GbR

(56) References cited:
- WO-A-00/21768
- GB-A- 2 154 676
- US-A1- 2008 073 860

## Description

The invention relates to a sealing assembly, preferably for trim parts of a vehicle. The sealing assembly comprises a first part with a cavity and an injection-moulded sealing profile, which is arranged in the cavity to seal a gap between the first and a second part. The invention further relates to a method for producing such a sealing assembly.

Sealing assemblies are widely known especially within the automotive industry. Such sealing assemblies are used to seal the wet side of a door against the dry side of the door, or when inserting a further component as a second part into an instrument panel or inner door panel. The sealing procedure itself becomes necessary because the first and second parts are usually not produced in such a way that there is no gap in between them.

Several solutions are used to provide such sealing assemblies. The most commonly found sealing assembly comprises a first part upon which a sealing profile is attached via an adhesive. The sealing profile itself is usually produced via an extrusion process. After the sealing profile is adhesively attached to the first part, a second part is being slid into an opening of the first part: The sealing profile then provides a seal between the first and second parts.

The disadvantage of above mentioned extruded sealing profiles is the complexity of the extruding process and the additional step of adhesively attaching the sealing profile to a first part necessary.

While extruded sealing profiles can be produced in various geometries, their usage causes other problems. When joining two ends of an extruded profile in case of a closed joint, it is very time consuming to merge the two ends to achieve good sealing characteristics.

Another solution of such a sealing assembly is provided when the first part comprises a small cavity into which a moulding robot inserts liquefied foam to produce an injection moulded sealing profile. The usage of such a sealing assembly is advantageous because the extra step of adhesively attaching the sealing profile to the first part can be omitted because of the nature of the bond between the first part and the sealing profile.

The question of how much force or pressure must be exerted onto the first and second parts to achieve a sufficient joint seal between the first and second parts is an important question when choosing the sealing assemblies. The injection-moulded sealing assemblies usually comprise a simple geometry of a simple protrusion extending from the cavity. The force necessary to deform the protrusion, and hence achieving a tight seal between the first and second parts, is usually quite high, because the protrusion must be compressed in the direction of the cavity. Since the cavity is already filled with the sealing profile the cross-section of the entire sealing profile resists the compression. Hence, the compressive forces acting on the sealing profile can possibly deform the first and second parts, resulting in visible deformations of said parts.

A sealing assembly according to the preamble of claim 1 is known from WO 00/21768A.

Hence, the problem to be solved by the invention at hand is to disclose a sealing assembly that can be easily produced and easily deformed such that it shows improved sealing capabilities.

The problems are solved by a sealing assembly according to claim 1.

The suggested sealing profile comprises a base positioned in the cavity, a flexible lip and a protrusion, both of which are connected to the base and produced in a single injection moulding process with the base. The protrusion arises from the base to a first level above a cavity edge level, such that the gap to be sealed is preferably not much wider than the distance between the first level and the cavity edge level. Hence the force necessary to compress the protrusion is rather small.

The flexible lip protrudes from the base to a second level above the cavity edge level, the second level being above the first level when measured from the cavity edge level. Thus the flexible lip is longer than the height of the protrusion and is flexed from its non-sealing or resting position to its sealing or working position. The flexible lip is bound to the base under an angle between 5° and 30°, preferably 10° and 20° to a normal direction of the base in a non-sealing position and the internal forces of the material of the flexible lip try to bring the flexible lip back into its non-sealing position when flexed into the sealing position, which occurs when the second part is inserted into the first part. In its sealing position, the flexible lip is flexed to an angle between 50° and 85°, preferably 60° and 75°.

Since the flexible lip protrudes from the base under an angle, i.e. leans to a certain side, it can easily flex from a non-sealing angle in the direction into which it protrudes to a sealing angle.

The flexible lip is not compressed along the direction of its length but mostly along the direction of its width, i.e. its cross-section. Hence the applied compressive forces must only overcome the cross-section of the flexible lip: It is only the cross-section trapped in between the first and second parts that needs to be compressed.

The width of the flexible lip at its base is chosen to be larger than the width of the gap to be sealed, while the width can be reduced towards the tip of the flexible lip. Since the flexible lip is flexed to an angle of less than 90° the cross-section is slightly larger than the width of the flexible lip. In the case where the width of the tip of the flexible lip is smaller than the width of the gap, the part of the flexible lip above the cross-section which is trapped between the first and second parts has a small enough width to not have to be compressed along its entire length, resulting in a reduced compressive force to be exerted when connecting the first and second parts and thus no deformation of the first and second parts can occur.

Only a single protrusion and a single flexible lip are necessary to achieve sufficient sealing properties.

To produce such a sealing assembly, the first part is produced comprising a cavity. Later the sealing profile is injection-moulded into the cavity preferably along the length of a trench-like cavity to form a preferably endless sealing section. The trench extends in a first direction, while the cavity is bordered by its cavity walls in a direction mostly perpendicular to the first direction.

The first and second parts are connected to each other and the flexible lip of the sealing profile is flexed from the non-sealing to the sealing position as explained above. This process is particularly advantageous when the first part is made from a first plastic material which is injection-moulded in a moulding tool. The sealing profile is preferably made from a second plastic material, which is compatible to the first plastic material with regards to a multi-component injection process, and injection-moulded while the first part is still in the moulding tool. This greatly reduces the effort necessary to produce such a sealing assembly.

Further embodiments of the invention are described in the dependent claims.

In one embodiment the flexible lip protrudes from the base at least partially from a level below the cavity edge. This allows for improved trapping of the flexible lip between an edge of the cavity of the first part and a surface of the second part. While the second part presses the flexible lip against the edge of the first part, the internal forces of the flexible lip try to reset the flexible lip back from the sealing to the non-sealing position pushing upon the second part. Thus a double sealing action is achieved.

In another embodiment an indentation is present between the flexible lip and the protrusion, which arises preferably from a level below the cavity edge. This allows for a greater flexibility of the flexible lip allowing higher internal forces to reset the flexible lip from the sealing to the non-sealing position. Thus the sealing characteristics are improved.

In another embodiment a base-width of the flexible lip is bigger than a tip-width of the flexible lip. As seen from a cross-sectional view, the shape of the flexible lip appears to be trapezoidal or conical. This improves the sealing assembly characteristics by reducing the compressive forces necessary to trap the flexible lip.

In another embodiment of the invention the sealing profile has a shore A hardness between 25-60, preferably 50-55. The described hardness has proven to be advantageous over harder or softer materials, in achieving a compromise between both good sealing properties and small compressive force necessary. The sealing profile can consist of a thermoplastic elastomer such as Sarlink X4555B42, or Multiflex G55A21BNO2001724 or Santoprene TPV12150M100 for example.

In another embodiment the first part consists of polypropylene or fibreglass or talcum hardened polypropylene and/or consists of polyethylene. Such materials are compatible to thermoplastic elastomers in a multi-component injection-moulding process.

In another embodiment the sealing profile is a continuous or endless sealing profile provided in a trench-like cavity. Since the sealing profile is inserted into the cavity in a single work step, no further connections between ends of the sealing profile are necessary.

In another embodiment the second part has a surface neighboring the gap, where the surface is profiled and/or has protrusions or is grained, making it an irregular surface. Since the internal forces of the flexible lip try to reset the sealing position to the non-sealing position, the sealing profile adapts to the irregularities of the surface of the second part.

Examples of different embodiments of the invention are explained in the following with reference to Figs. 1 to 4, which show
- Figs. 1a and 1b: an example of an embodiment of a sealing assembly in the non-sealing and the sealing position;
- Fig. 2: a further embodiment of a sealing assembly;
- Figs. 3a to 3c: usage of a sealing assembly in an inner door panel with a door pocket;
- Fig. 4: a moulding tool with a first part and a sealing profile.

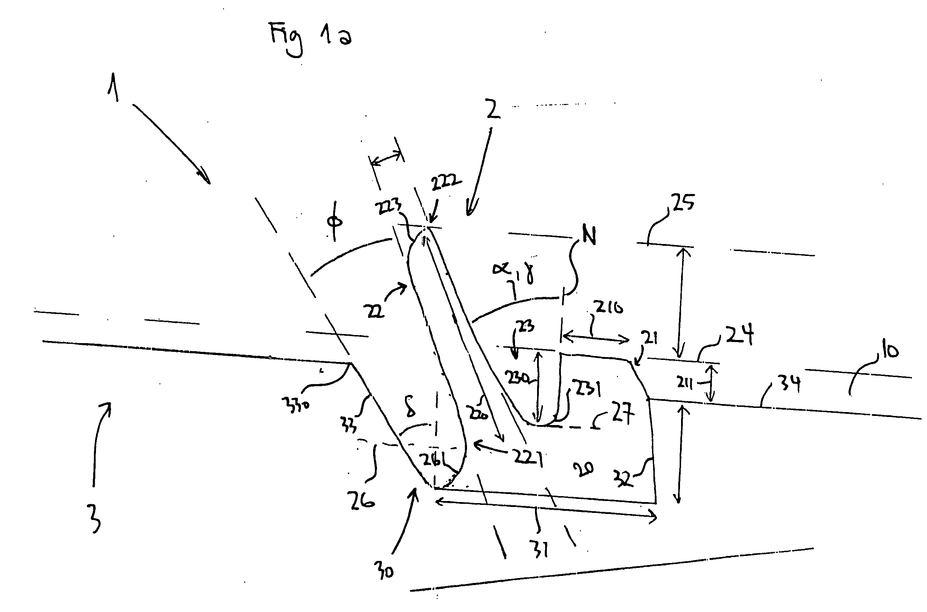

Fig. 1a shows a sealing assembly 1 comprising a sealing profile 2 and a first part 3. The sealing profile 2 is arranged within a cavity 30 of the first part 3. The sealing profile 2 consists of a thermoplastic elastomer of shore A hardness 55, while the first part 3 consists of polypropylene.

The sealing profile 2 comprises a base 20, which is arranged within the cavity 30 of a depth of 1.5 mm and is connected to the bottom 31 of said cavity across a length of 3.0 mm. The base 20 is also connected to a first cavity wall 32 along which a protrusion 21 arises from the base 20. A flexible lip 22 protrudes from the base 20 and is separated from the protrusion 21 by an indentation 23.

The flexible lip 22 protrudes from the base 20 in its non-sealing position at an angle α measured from a normal direction N of the base. In the example given α measures between 15° to 20° depending on the neighboring areas of curvature and the specific thermoplastic elastomer used. The internal forces of said material of the flexible lip 22 are such that when the flexible lip 22 is flexed to another angle but the angle α, the internal forces try to reset the position to the non-sealing position.

The length 220 of the flexible lip 22 is such that the flexible lip 22 rises to a second level 25 above the cavity edge level 34. In the given example the length 220 measures between 1.7 and 3.5 mm. The width of the flexible lip 22 at the bottom 221 of the flexible lip 22 is bigger than the width at the tip 222 of the flexible lip 22. In the given example the bottom 221 measures between 0.6 and 1 mm, while the tip 222 measures between 0.3 and 0.5 mm. The curvature 223 of the flexible lip 22 has a radius of between 0.4 and 0.7 mm. As can be seen from the drawing of Fig. 1a the flexible lip arises from the base 20 at a third level 26 which is below the cavity edge level 34. As can be seen the base 20 shows a curvature 261 from the bottom 31 of the cavity 30 to the third level 26 with a radius of between 0.3 to 0.6 mm.

In addition to the internal forces of the flexible lip 22, the two bordering curvatures 231 and 261 support the flexible lip 22 when resetting it from its sealing position to its non-sealing position due to the forces that act upon the areas of curvature in the sealing position.

The second slanted cavity wall 33 is slanted at an angle δ from the normal direction N of the base 20. A gap (not the gap between the first and second parts) is present between the surface of the second slanted wall 33 and the flexible lip, which is defined by an angle ϕ, which ranges from 15° to 20°. The angle δ and the length 220 of the flexible lip 22 are chosen such that the flexible lip 22 touches the edge 330 with an area in the region of the curvature 223 or below.

The protrusion 21 arises from the base 20 to a first level 24 measured from the cavity edge level 34. The width 210 is chosen to be wider than the width of the bottom 221 of the flexible lip 22, which leads to a wider support area of the protrusion 21. The height 211 of the protrusion 21 is slightly higher than the later gap to be sealed. Hence, not much compressive force is needed to compress the protrusion 21 to a smaller height. The width 210 offers a wider support area to act as a reliable stopper for the second part.

The indentation 23 extends from the first level 24 to an indentation level 27 resulting in a depth 230. At the bottom of the indentation a curvature 231 connects the protrusion 21 and the flexible lip 22. The radius of the curvature is comparable to the previous curvatures.

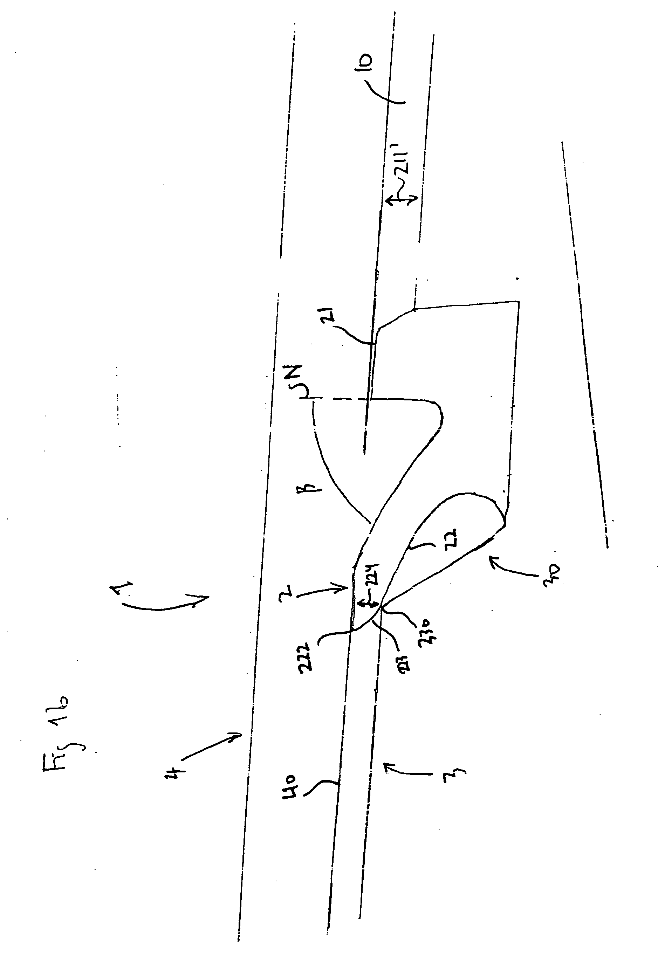

In Fig. 1b the sealing assembly 1 of Fig. 1a is shown in its sealing position. The sealing assembly 1 now comprises the sealing profile 2, the first part 3 and the second part 4 which is separated from the first part 3 by a gap 10. The gap 10 has a width 211' of 0.5mm, which is slightly smaller than height 211 of the protrusion 21 in its non-sealing or uncompressed position. The second part 4 cannot move closer to the first part due to the wide support area of the protrusion 21. While the protrusion 21 is compressed by the forces exerted by the second part, the flexible lip 22 is flexed from the non-sealing position determined by the angles α and ϕ, to a sealing position indicated by the angle β, which ranges from 60° to 75° depending on the length and the width of the flexible lip 22 and distance between the cavity edge 330 and the flexible lip 22 in its non-sealing position as well as irregularities of the surface 40.

In its sealing position, the tip 222 of the flexible lip 22 is in contact with a profiled or structured surface 40 of the second part 4. Furthermore an area of the flexible lip 22 is in contact with the edge 330 of the cavity 30, in particular an area comprising the curvature 223. The compressive force upon the flexible lip 22 exerted by the second part 4, mainly acts along the cross-section 224. The flexible lip 22 tries to reset into its non-sealing position, i.e. it tries to reduce the angle β back to the angle α. While being pressed upon the cavity edge 330, parts of the flexible lip 22 to the left of the cavity edge 330 try to reset to the non-sealing position thus providing an additional sealing action. Hence, the flexible lip 22 presses upon the structured surface 40 and it is easy to understand that the flexible lip 22 will adapt to irregularities along the trench-like cavity 30, where the trench extends in a first direction perpendicular to the plane of the drawing. By adjusting to different structures of the surface 40 the force with which the flexible lip 22 is pressed upon the cavity edge 330 changes in strength and the cross-section upon which this force acts is shifted to the left or the right of the cross-section 224 depending on the structure of the surface 40. Hence, the invention is particularly advantageous when used as an endless and continuous joint sealing profile, especially as a joint sealing profile.

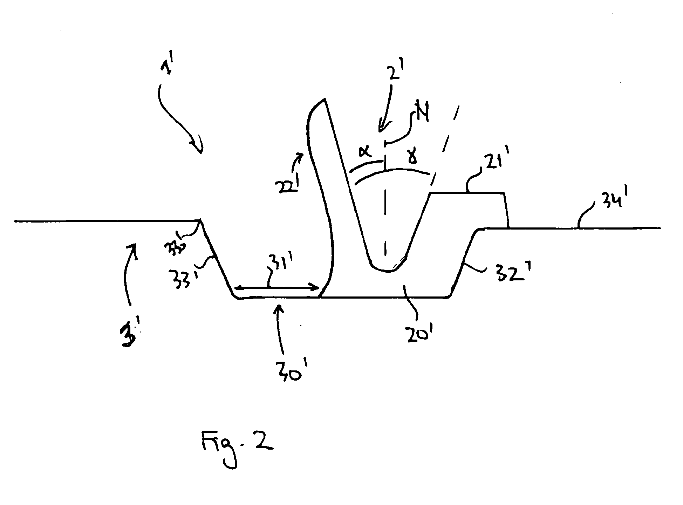

Fig. 2 shows a further example of an embodiment of the sealing assembly. The sealing assembly 1' comprises a sealing profile 2' and a first part 3', which is made out of polyethylene. In contrast to the embodiment shown in Figs. 1a and 1b the sealing profile 2' does not cover the entire bottom of the cavity 30'. There is an uncovered bottom 31' across a length from 0.5 mm to 1.5 mm, which is advantageous when trying to achieve a connection between the flexible lip 22 it its sealing position and the edge 330' of the slanted wall 33'. Whilst the flexible lip 22' protrudes from the base 20' in an angle α measured to the normal of the base, a differently shaped indentation 23' causes an angle γ between a sidewall of the protrusion 21' and the flexible lip 22' to be different from the angle α unlike Figs. 1 the situation shown in. The range of the angle α is comparable to Figs. 1, while 1.5α is approximately γ. Thus different resetting forces acting upon the flexible lip 22' in its sealing position occur due to the different indentation 23' and the different shape and length of the curvature of the indentation.

Furthermore the protrusion 21' extends outside of the cavity 30' covering the entire first wall 32' and also a small section of a surface 34' of the first part 3'.

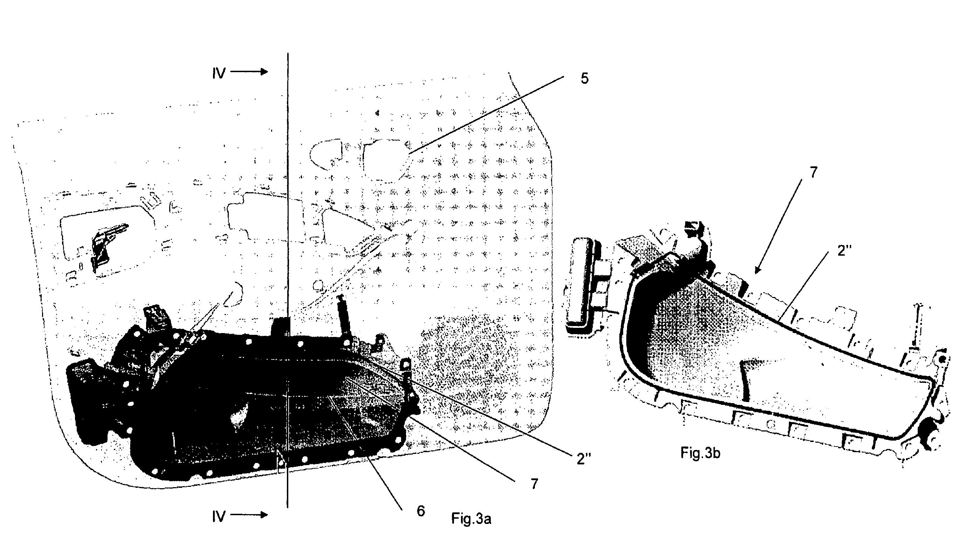

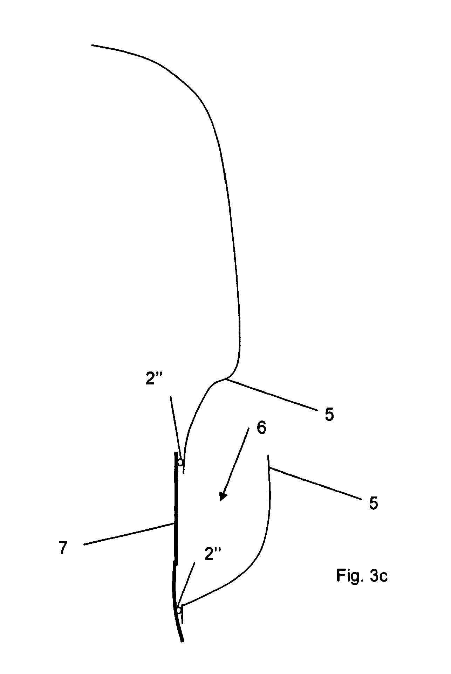

In the series of Figs. 3, the usage of an embodiment of a sealing assembly is explained. Fig. 3a shows a door trim panel 5 with an opening 6 onto which a door pocket 7 with an endless sealing profile 2 " is placed from the wet side of the door trim panel 5, i.e. the side not visible from the vehicle's interior. It can be seen that a sealing profile 2" runs along the edges of the wall of the door pocket 7 as shown in Fig. 3b. Upon insertion of the door pocket 7 onto the opening 6 as shown in the cross-section IV of Fig. 3c, the sealing profile 2", runs along the entire edge of the opening 6, and seals the wet side of the door panel 5 (which is to the left side of the wall 50 of the door panel 5) and the dry side (which is on the right side of the wall 50 the door panel 5) from each other.

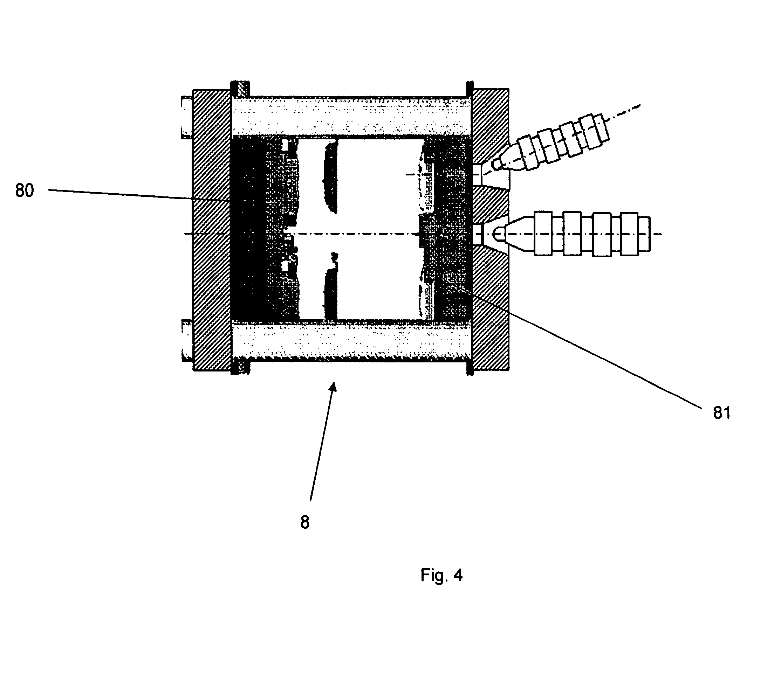

A moulding tool 8 is shown in Fig. 4. The moulding tool 8 comprises a first mould 80 and a second mould 81 with retractable protrusions or other means known from moulding tools used in bi- or multi-component injection processes to form a cavity for a sealing profile or further components. First, the first part 3 and the cavity 30 are formed by injecting polypropylene/polyethylene through the lower injector shown in Fig. 4. Later, the retractable protrusions are retracted such that a trench-like cavity (which is not the cavity of the first part, but a negative form of the sealing profile to be produced) with a geometry of the sealing profile is obtained. This cavity is then filled with a thermoplastic elastomer through the upper injector shown in Fig. 4 resulting in an endless sealing profile as described above.

## Claims

1. Sealing assembly (1, 1'), preferably for trim parts (5, 7) of a vehicle, which comprises a first part (3, 3') with a cavity (30, 30') and an injection-moulded sealing profile (2, 2', 2"), which is arranged in the cavity (30, 30') to seal a gap (211') between the first and a second part (4),
where
the sealing profile (2, 2', 2") comprises a base (20) positioned in the cavity, a flexible lip (22) and a protrusion (21), where the protrusion protrudes from the base to a first level (24) above a cavity edge level (34) and the flexible lip, which in a non-sealing position arises from the base to a second level (25) above the cavity edge level (34) under an angle between 5° and 30° (α) to a normal direction (N) of the base and in a sealing position is flexed to an angle between 50° and 85° (β) to the normal direction,
the second level being above the first level, **characterized in that** an indentation (23) to a level (27) below the cavity edge (34) is present between the flexible lip (22) and the protrusion (21)
and the flexible lip (22) arises from the base (20) at least partially from a level (26) below the cavity edge level(34).

2. Sealing assembly according to claim 1, **characterized in that** a base-width of the flexible lip (22) is bigger than a tip-width of the flexible lip (22).

3. Sealing assembly according to one of the previous claims, **characterized in that** the cavity (30, 30') comprises a slanted cavity wall (32, 32') and the flexible lip (22) protrudes to the side of the slanted cavity wall.

4. Sealing assembly according to one of the previous claims, **characterized in that** the sealing profile (2, 2', 2") is at least partially not attached to a cavity wall (33, 33'), such that the flexible lip (22) in the non-sealing position does not touch the cavity wall and in the sealing position flexes to touch an edge (30) of the cavity wall (32, 32').

5. Sealing assembly according to one of the previous claims, **characterized in that** the sealing profile has a shore A hardness between 25-60, preferably 50-55.

6. Sealing assembly according to one of the previous claims, **characterized in that** the first part (3) consists of polypropylene and/or polyethylene and the sealing profile (2, 2', 2") consist of a thermoplastic elastomer.

7. Sealing assembly according to one of the previous claims, **characterized in that** the sealing profile (2, 2', 2") is a continuous sealing profile.

8. Sealing assembly according to one of the previous claims, **characterized in that** a surface (40) of the second part neighbouring the first part to form the gap (211') to be sealed, is at least in sections non-flat and/or structured.

9. Method for producing a sealing assembly according to one of the previous claims, comprising the following steps:
a) producing the first part (3, 3') and the cavity (30, 30') and the second part (4);
b) injection moulding the sealing profile (2, 2', 2") into the cavity (30, 30'), preferably along the length of the cavity (30, 30');
c) connecting the first and the second part to each other, wherein the flexible lip (22) of the sealing profile (2, 2', 2") is flexed from the non-sealing to the sealing position.

10. Method according to claim 9, **characterized in that** the first part is injection-moulded from a first plastic material in a moulding tool (8) and the sealing profile is injection-moulded while the first part (3) is still in the moulding tool (8), and the injection-moulding preferably occurs in a multi-injection process.

11. Application of a sealing assembly according to one of the claims 1 through 8 in a door or instrument panel trim part (5, 7), e.g. a trim panel (5) and a corresponding air vent, speaker, door pocket (7) or console as first and second parts.

12. Application of a sealing assembly according to one of the claims 1 through 8 in an door or instrument panel trim part to seal a dry side from a wet side of the trim part.

## Patentansprüche

1. Dichtungsanordnung (1, 1'), vorzugsweise für Formteile (5, 7) eines Fahrzeugs, die ein erstes Teil (3, 3') mit einem Hohlraum (30, 30') und ein Spritzguss-Dichtungsprofil (2, 2', 2"), das in dem Hohlraum (30, 30') angeordnet ist, um einen Spalt (211') zwischen dem ersten und einem zweiten Teil (4) abzudichten, aufweist,
wobei
das Dichtungsprofil (2, 2', 2") eine in dem Hohlraum positionierte Basis (20), eine flexible Lippe (22) und einen Vorsprung (21) aufweist, wobei der Vorsprung von der Basis bis zu einem ersten Pegel (24) über einem Hohlraum-Kantenpegel (34) vorsteht, und die flexible Lippe in einer nichtdichtenden Position von der Basis bis zu einem zweiten Pegel (25) über dem Hohlraum-Kantenpegel (34) unter einem Winkel zwischen 5° und 30° (α) zu einer Normalrichtung (N) ansteigt und in einer dichtenden Position zu einem Winkel zwischen 50° und 85° (β) zu der Normalrichtung gebogen ist, wobei der zweite Pegel über dem ersten Pegel liegt,
**dadurch gekennzeichnet, dass** eine Einbuchtung (23) bis zu einem Pegel (27) unter der Hohlraumkante (34) zwischen der flexiblen Lippe (22) und dem Vorsprung (21) vorhanden ist und die flexible Lippe (22) von der Basis (20) zumindest teilweise von einem Pegel (26) unter dem Hohlraum-Kantenpegel (34) aus ansteigt.

2. Dichtungsanordnung nach Anspruch 1, **dadurch gekennzeichnet, dass** eine Basisbreite der flexiblen Lippe (22) größer als eine Spitzenbreite der flexiblen Lippe (22) ist.

3. Dichtungsanordnung nach einem der vorhergehenden Ansprüche, **dadurch gekennzeichnet, dass** der Hohlraum (30, 30') eine schräge Hohlraumwand (32, 32') aufweist und die flexible Lippe (22) zu der Seite der schrägen Hohlraumwand vorsteht.

4. Dichtungsanordnung nach einem der vorhergehenden Ansprüche, **dadurch gekennzeichnet, dass** das Dichtungsprofil (2, 2', 2") zumindest teilweise nicht an einer Hohlraumwand (33, 33') befestigt ist, derart, dass die flexible Lippe (22) in der nichtdichtenden Position die Hohlraumwand nicht berührt und in der dichtenden Position gebogen ist, um eine Kante (30) der Hohlraumwand (32, 32') zu berühren.

5. Dichtungsanordnung nach einem der vorhergehenden Ansprüche, **dadurch gekennzeichnet, dass** das Dichtungsprofil eine Shore-A-Härte zwischen 25 - 60, vorzugsweise 50 - 55 hat.

6. Dichtungsanordnung nach einem der vorhergehenden Ansprüche, **dadurch gekennzeichnet, dass** das erste Teil (3) aus Polypropylen und/oder Polyethylen besteht und das Dichtungsprofil (2, 2', 2") aus einem thermoplastischen Elastomer besteht.

7. Dichtungsanordnung nach einem der vorhergehenden Ansprüche, **dadurch gekennzeichnet, dass** das Dichtungsprofil (2, 2', 2") ein kontinuierliches Dichtungsprofil ist.

8. Dichtungsanordnung nach einem der vorhergehenden Ansprüche, **dadurch gekennzeichnet, dass** eine Oberfläche (40) des zweiten Teils, die dem ersten Teil benachbart ist, um den abzudichtenden Spalt (211') zu bilden, zumindest in Abschnitten nicht flach und/oder strukturiert ist.

9. Verfahren zum Herstellen einer Dichtungsanordnung nach einem der vorhergehenden Ansprüche, aufweisend die folgenden Schritte:
a) Herstellen des ersten Teils (3, 3') und des Hohlraums (30, 30'), sowie des zweiten Teils (4) ;
b) Spritzen des Dichtungsprofils (2, 2', 2") in den Hohlraum (30, 30'), vorzugsweise entlang der Länge des Hohlraums (30, 30');
c) Verbinden des ersten und des zweiten Teils miteinander, wobei die flexible Lippe (22) des Dichtungsprofils (2, 2', 2") aus der nichtdichtenden in die dichtende Position gebogen wird.

10. Verfahren nach Anspruch 9,d **dadurch gekennzeichnet, dass** das erste Teil aus einem ersten Kunststoffmaterial in einem Formwerkzeug (8) durch Spritzgießen hergestellt wird und das Dichtungsprofil durch Spritzgießen hergestellt wird, während das erste Teil (3) noch in dem Formwerkzeug (8) ist, und das Spritzgießen vorzugsweise in einem Multiinjektionsvorgang stattfindet.

11. Anwendung einer Dichtungsanordnung nach einem der Ansprüche 1 bis 8 in einem Formteil (5, 7) einer Tür oder eines Armaturenbretts, z.B. einem Formteil (5) und einer zugeordneten Lüftungsöffnung, einem Lautsprecher, einer Türentasche (7) oder Konsole als erstem und zweitem Teil.

12. Anwendung einer Dichtungsanordnung nach einem der Ansprüche 1 bis 8 in einem Formteil einer Tür oder eines Armaturenbretts, um eine Trockenseite gegenüber einer Nassseite des Formteils abzudichten.

## Revendications

1. Assemblage d'étanchéité (1, 1'), de préférence pour des parties de garniture (5, 7) d'un véhicule, lequel comprend une première partie (3, 3') avec une cavité (30, 30') et un profil d'étanchéité moulé par injection (2, 2', 2"), lequel est agencé dans la cavité (30, 30') afin de rendre étanche un espace (211') entre la première partie et une seconde partie (4),
dans lequel le profil d'étanchéité (2, 2', 2") comprend une base (20) positionnée dans la cavité, une lèvre flexible (22) et une protubérance (21), où la protubérance fait saillie depuis la base jusqu'à un premier niveau (24) au-dessus d'un niveau de bord de cavité (34) et la lèvre flexible, qui est en une position de non étanchéité, se dresse depuis la base jusqu'à un second niveau (25) au-dessus du niveau de bord de cavité (34) sous un angle entre 5° et 30° (α) par rapport à une direction normale (N) à la base et dans une position d'étanchéité, est fléchie selon un angle entre 50° et 85° (β) par rapport à la direction normale, le second niveau étant au-dessus du premier niveau, **caractérisé en ce qu'**une indentation (23) à un niveau (27) au-dessous du bord de cavité (34) est présente entre la lèvre flexible (22) et la protubérance (21), et la lèvre flexible (22) se dresse depuis la base (20) au moins partiellement depuis un niveau (26) au-dessous du niveau de bord de cavité (34).

2. Assemblage d'étanchéité selon la revendication 1, **caractérisé en ce qu'**une largeur de base de la lèvre flexible (22) est supérieure à une largeur de pointe de la lèvre flexible (22).

3. Assemblage d'étanchéité selon l'une des revendications précédentes, **caractérisé en ce que** la cavité (30, 30') comprend une paroi de cavité inclinée (32, 32') et la lèvre flexible (22) fait saillie sur le côté de la paroi de cavité inclinée.

4. Assemblage d'étanchéité selon l'une des revendications précédentes, **caractérisé en ce que** le profil d'étanchéité (2, 2', 2") est au moins partiellement non fixé à une paroi de cavité (33, 33') de telle sorte que la lèvre flexible (22) dans la position de non étanchéité ne touche pas la paroi de cavité et dans la position d'étanchéité, fléchisse pour toucher un bord (30) de la paroi de cavité (32, 32').

5. Assemblage d'étanchéité selon l'une des revendications précédentes, **caractérisé en ce que** le profil d'étanchéité présente une dureté Shore A entre 25-60, de préférence 50-55.

6. Assemblage d'étanchéité selon l'une des revendications précédentes, **caractérisé en ce que** la première partie (3) est constituée par du polypropylène et/ou du polyéthylène et le profil d'étanchéité (2, 2', 2") est constitué par un élastomère thermoplastique.

7. Assemblage d'étanchéité selon l'une des revendications précédentes, **caractérisé en ce que** le profil d'étanchéité (2, 2', 2") est un profil d'étanchéité continu.

8. Assemblage d'étanchéité selon l'une des revendications précédentes, **caractérisé en ce qu'**une surface (40) de la seconde partie au voisinage de la première partie pour former l'espace (211') à rendre étanche est au moins selon des sections non planes et/ou structurées.

9. Procédé pour fabriquer un assemblage d'étanchéité selon l'une des revendications précédentes, comprenant les étapes qui suivent :
a) fabrication de la première partie (3, 3') et de la cavité (30, 30') et de la seconde partie (4) ;
b) moulage par injection du profil d'étanchéité (2, 2', 2") à l'intérieur de la cavité (30, 30'), de préférence suivant la longueur de la cavité (30, 30') ; et
c) connexion des première et seconde parties l'une à l'autre, où la lèvre flexible (22) du profil d'étanchéité (2, 2', 2") est fléchie depuis la position de non étanchéité jusqu'à la position d'étanchéité.

10. Procédé selon la revendication 9, **caractérisé en ce que** la première partie est moulée par injection à partir d'une première matière plastique dans un outil de moulage (8) et le profil d'étanchéité est moulé par injection tandis que la première partie (3) est encore dans l'outil de moulage (8), et le moulage par injection est de préférence réalisé selon un processus à multiples injections.

11. Application d'un assemblage d'étanchéité selon l'une des revendications 1 à 8 dans une portière ou dans une partie de garniture de tableau de bord (5, 7), par exemple un panneau de garniture (5) et une bouche d'air correspondante, un haut-parleur, une poche de portière (7) ou une console, en tant que première et seconde parties.

12. Application d'un assemblage d'étanchéité selon l'une des revendications 1 à 8 dans une portière ou dans une partie de garniture de tableau de bord afin de rendre étanche un côté sec par rapport à un côté humide de la partie de garniture.
